# EUROPEAN PATENT APPLICATION

(11) **EP 4 300 676 A1**
(43) Date of publication of application: **03.01.2024**
(21) Application number: 22181827.1
(22) Date of filing: 29.06.2022
(51) Int. Cl.: H01M 50/204, H01M 50/242, H01M 50/249, H01M 50/271, B60K 1/04

(54) **A SPACER FOR A BATTERY PACK TOP COVER, A BATTERY PACK ASSEMBLY, AND A METHOD FOR MOUNTING BATTERY PACKS**

(71) Applicant: Vibracoustic Forsheda AB, 331 71 Forsheda (SE)
(72) Inventor: Andersson, Jonas, 331 30 Värnamo (SE)
(74) Representative: AWA Sweden AB

(57) **Abstract**

A spacer is disclosed for limiting movements of a battery pack top cover towards a car body. The spacer comprises a rigid support bracket arranged to be attached to the top cover. An elastomeric member supported by the support bracket has first and second integrally formed parts. The first part is elastically deformed mainly by bending, and the second part is deformed mainly by compression, together generating a non-linear repulsive force. A method for mounting a battery pack using such spacers is also disclosed.

## Description

### TECHNICAL FIELD

The present disclosure relates to the field of automotive battery packs, and more specifically to a spacer for use in mounting an automotive battery pack to a car body, an assembly comprising such spacers, and a method for mounting a battery pack to a car body using such spacers.

### BACKGROUND

The increased electrification in the automotive industry involves many challenges, including the design of battery systems and the assembly thereof to electrical driven vehicles, such as passenger cars, trucks, etc.. Design considerations for battery systems include passenger safety such as crash energy absorption, protection of the battery pack against shock and vibrations, thermal management, cost and weight constraints, assembly space constraints, and production assembly considerations.

An automotive battery system, also referred to as a battery pack, for electrical driven vehicles may have a considerable size and weight. As an example, a battery pack attached to the underside of a passenger car may have a size of 2 x 2 meters, and a weight representing around 25% of the total car weight. This large mass have to be designed and attached to the car underside in a way that the battery pack remains structurally and functionally stable during driving conditions, and in a way that allows an efficient and secure assembly of the battery pack to the car underside. The large size of the battery pack also represents a challenge with respect to tolerances. In the car assembly process, a battery pack is attached to the car underside for forming an assembled car body. In many modern cars, the battery pack includes structures arranged to take up structural loads and to absorb crash energy.

In general, an automotive battery pack comprises a housing and a number of components arranged in the housing, including a plurality of rechargeable batteries, typically grouped in a battery modules, electronic battery management systems, cooling systems, thermal insulation, and structures to accommodate the individual battery modules.

The housing of an automotive battery pack is generally made from metal, such as aluminum and/or steel structures. The housing may comprise a trough-like housing part and a housing top cover attached to the trough-like housing part for closing the same. In some designs, the trough-like housing part is provided by a peripheral frame and a bottom cover attached to the peripheral frame. In other designs, the trough-like housing part is provided by a one piece component, such as a deep-drawn aluminum sheet. The housing may also be provided with an internal compartment or accommodation structure for accommodating the battery modules. The top cover of the housing, sometimes also referred to as the top cover or the upper shell, may typically be manufactured from a metal sheet, such as an aluminum sheet. The top cover may have a shape and profile corresponding to the shape and profile of the car body underside. The shape and profile of the car body underside may vary substantially between different car brands and models and, accordingly, the top cover of the battery housing may be designed to present a shape and profile corresponding to the shape and profile of the car body underside.

From an assembly point of view, because of the presence of the battery modules within the housing it is normally not possible to attach the battery pack to the car body underside by attaching top cover to the car body underside. For the attachment of the battery pack to the car body underside, the housing of the battery pack may therefore typically be provided with external attachment features along the sides of the housing, such as elongate aluminum or steel structures attached to the opposite sides of the through-like housing part and provided with plurality of screw holes for receiving assembly screws screwed into the car body underside for attaching the battery pack.

In the prior art, it is known to arrange a plurality of spacer elements made of foamed elastic material in the space between the vehicle under body and the battery pack top cover. The foam spacer elements may be rectangular elements and/or more elongate rib-shaped elements, typically attached by adhesive to the upper side of the top cover. The foam spacers are slightly compressed in response to attaching the battery pack by screws as mentioned above. During driving, the foam spacers prevent direct contact between the car body underside and the top cover of the battery pack.

### SUMMARY OF INVENTION

In the light of the above, the present invention aims at providing enhanced spacer and assembly solutions in the field of battery packs assembly for electrical vehicles.

According to a first aspect of the inventive concept, there is provided a spacer extending along an axis of the spacer between a top end of the spacer and a bottom end of the spacer, said spacer being arranged to be provided between a car body and a battery pack top cover for limiting movement of the top cover towards the car body, said spacer comprising:
a rigid support bracket having a bracket height extending along said axis between a bracket base of the bracket and a bracket top of the bracket, said bracket base being arranged to be attached to the top cover and defining the bottom end of the spacer; and
an elastomeric member supported by the support bracket and made from a solid elastomeric material, said elastomeric member having first and second integrally formed parts, said first part extending to and forming the top end of the spacer, and said second part being attached to the support bracket,
wherein:
   the first part of the elastomeric member is structured and arranged to be elastically deformed mainly by bending of the elastomeric material in response to external forces acting on the spacer for generating a first repulsive spring force;
   the second part of the elastomeric member is structured and arranged to be elastically deformed mainly by compression of the elastomeric material in response to said external forces acting on the spacer exceeding a predetermined value, for generating a second repulsive force higher than the first repulsive force generated by the first part; and
   said bracket height plus the height of the elastomeric member between the bracket top and the top end of the spacer forms a total height of the spacer.

From a general functional perspective, during driving conditions the inventive spacer will act as:
∘ a movement limiter & buffer with regard to vertical movements of the top cover,
∘ a vibration and noise absorber between the battery pack and the car body, and
∘ a thermal filter between the underside of the car body and the battery pack.

During driving conditions, the elastomeric member of the inventive spacer will be subject to an elastomeric deformation in response to external forces caused by movements of the top cover in relation the underside of the car body. As stated above, such movements of the top cover towards the underside of the car body may be due to heat generated in the battery pack. The heat may result in pressure changes within the battery pack, and it may also result in direct heating of the top cover. Both phenomena may cause swelling or shape changes of the top cover which, if not counteracted, may result in an unallowed direct contact between the top cover and the underside of the car body. In some cases, a vertical movement of the top cover may also be caused by a certain movement of the whole battery pack.

The elastomeric deformation of the elastomeric member generates a repulsive spring force acting to counteract and limits such upward movement of the top cover. For initial minor movements of the top cover, a repulsive spring force is generated by the first part of the elastomeric member, being deformed by bending mainly. Bending of the first part of the elastomeric member in response to external forces may take place by the first part, by an elastomeric bending thereof, move down into a space of the spacer. The value of the first repulsive force generated by the first part of the elastomeric member may increase in response to an increased cover lid movement and the resulting increased bending of the first part.

If the external force acting on the spacer exceeds a predetermined value and, accordingly, the total height of the spacer has been reduced to a certain extent, the second part of the elastomeric member becomes active to assist in restricting further movement of the top cover. Further upward movement of the top cover will result in an elastomeric compression of the second part of the elastomeric member along the axis of the spacer, generating a second repulsive spring force, higher than the first repulsive spring force generated by the first part. The result may be expressed as an overall non-linear repulsive spring force characteristic of the spacer. A distinct increase in the repulsive spring force may be achieved when the second part becomes active. As an illustrative, non-limiting example, the initial first repulsive force may be selected such that the total reaction force of all of the spacers of a battery pack does not to exceed 100 N in the operation range of the first part of the elastomeric members, whereas the second higher repulsive force generated by the second part of the spacers may selected such that the total reaction force of all the spacers together of the battery pack is at least 300 N after the second parts have become active, i.e. after the top cover movement has exceeded a threshold value corresponding to the normal operation range of the spacer, such as 7 mm.

A general advantage of the inventive concept is that the invention provides increased control and new functions in relation to prior-art foamed elements.

The inventive concept presents advantages over prior-art top foamed spacers in terms of control of the repulsive spring force or reaction force generated by the spacer on the top cover of the battery pack. These advantages apply both during assembly conditions and driving conditions. Prior-art foamed spacers do not present any controlled functions. They are just simple foamed elements.

The invention offers enhanced control and design possibilities with respect to the dependency between the compression degree of the spacer and the repulsive spring force generated in response to the spacer compression.

The invention makes it possible to design the spacer to provide an optimal repulsive spring force characteristic for an available space/height for the spacer between the car body and the battery pack.

Also, spacers according to the inventive concept can be designed to handle loads generated during driving conditions over a rather large distance of travel of the spacer, i.e. a large operation range of the elastomeric member of the spacer.

It is advantageous for several reasons to be able to better control the repulsive spring force of spacers mounted between a battery pack top cover and the underside of a car body:
∘ During the manufacturing and assembly stage, when the battery pack is brought towards the underside of the car body to be attached thereto, the spacers arranged on the top cover are brought into contact with the underside of the car body to prevent direct contact between the top cover and the car body. During the attachment operation, when the battery pack is securely attached to the car body by screws along sides of the battery pack, the plurality of spacers arranged over the top cover are slightly compressed (pre-biased) in response to the battery pack attachment. If the initial repulsive spring force generated by each individual spacer is too high during this assembly procedure, the total pre-biasing repulsive force generated by all of the spacers together will make the positioning and the attachment of the battery pack difficult. From this assembly perspective, the initial repulsive spring force of a non-compressed spacer should not be too high.
∘ On the other hand, from a driving condition perspective, the repulsive force generated by the spacer in its pre-biased position of use should be sufficient to prevent excessive movements of the top cover towards the underside of the car body. Such movements of the top cover towards the car body may be due to heat generated in the battery pack. The heat may result in pressure changes within the battery pack, and it may also result in direct heating of the top cover, both causing unwanted swelling or shape changes of the top cover which, if not limited, may result in direct contact between the top cover and the car body. The degree of movement of the top cover may vary substantially between different car and battery designs, but may as a non-limiting example be in the order of 5 to 10 mm. For various reasons, it is important that such vertical movements of the top cover are both counteracted and limited. From this perspective, it is an advantage to be able both control the value of the repulsive spring force generated by the spacers during such top cover movement, and to control how the repulsive spring force depends on the spacer compression degree, i.e. the distance-force characteristic. Especially, it may be advantageous to design the spacers such that the repulsive force has a non-linear characteristic presenting an initial lower repulsive spring force for relatively small movements of the top cover, and a substantial higher repulsive spring force in response to larger movements of the top cover close to a maximum allowable movement of the top cover.

The invention makes it possible to control to a high degree both the general value of the repulsive spring force to the specific needs for a battery pack assembly, and the dependency between the compression degree of the spacer and the repulsive spring force generated in response to the spacer compression. In prior-art simple foamed spacers used for automotive battery pack mounting, the repulsive spring force generated by the foam material is essentially proportional with the compression distance of the foamed element and can only be controlled by varying the thickness of the foam material. The inventive concept, using an elastomeric element which is made from a solid elastomeric material and which is supported by a rigid support bracket, makes it possible to design the spacer to generate the optimal repulsive force for different compression degrees of the spacer, especially a controlled non-linear force-distance characteristic.

Further advantages of the inventive concept results from the arrangement of a rigid support bracket supporting an elastomeric element and forming part of the total spacer height. The rigid support bracket may for instance be manufactured entirely of in part from a rigid plastic material, e.g. a reinforced plastic material. The elastomeric member may be molded onto the support bracket, or assembled thereto such as by adhesive and/or a mechanical connection.

For a given assembly, the support bracket may have a fixed (non-varying) bracket height, whereas the elastomeric member of the spacer is flexible and may vary in height in response to top cover movements. The non-varying bracket height, and the variable height of the portion of the elastomeric element extending beyond (above) the bracket top, together define a total variable height of the spacer, corresponding to the varying distance between the top cover of the battery pack and the underside of the car body. There are many advantages obtained by using a rigid support bracket as a part of the total spacer height:
∘ One advantage of using a rigid support bracket as a part of the total spacer height relates to security. The rigid support bracket will define an absolute minimum possible distance between the top cover and the underside of the car body. If for some reason the upward movement of the top cover is so excessive that further movement cannot be accommodated by repulsive forces generated by the elastomeric members of the spacers, the rigid support bracket, acting as a rigid spacer, will effectively prevent unallowed direct contact between the battery top cover and the underside of the car body. From this perspective, a minimum bracket height may as a non-limiting example only be in the order of 10 mm. Depending on the design of the inventive spacer, such an absolute minimum distance possible between the top cover and the car body underside may be equal to the bracket height, or equal to the bracket height plus some compressed part of the elastomeric member located over a top surface of the support bracket.
∘ Another advantage of using a rigid support bracket as a part of the total spacer height relates to the option of varying the bracket height. The distance between a battery pack top cover and the underside of a car body may vary substantially, between different car models, between different battery packs, and between different locations over a given top cover. Such variations in the space where the spacers are to be located may be at least partly accommodated by varying the bracket height, without necessarily also varying the design or height of the elastomeric member. This is a general advantage from a manufacturing perspective. Also, the repulsive spring force characteristics of a set of spacers can be maintained the same, while varying only the bracket height. This may be an advantage if the repulsive spring force characteristic is to be the same for all spacers attached to a given top cover presenting varying distances to the car body underside.
∘ Yet another advantage of using a rigid support bracket as a part of the total spacer height relates to creating an optimal operation range for the elastomeric member. Using a rigid support bracket as a part of the total spacer height has the advantage that the bracket height may be varied and selected in the design process to obtain a desired operation range for the flexible elastomeric member. For instance, it is an advantage if the spacer can take up relatively large tolerances in the distance between car body and top cover. Such tolerances may be in the order of plus/minus several millimeters. This may be solved by selecting a bracket height giving a sufficiently large operation range of the elastomeric member. As a non-limiting illustrative example only, if the total distance between the top cover and the car body is around 19 mm (15,5 ± 3,5 mm allowed variance) at a certain location on the top cover, and if the desired flexible operation range (top cover movement) is around 7 ± 3,5 mm, then a bracket height of around 10,5 mm may be selected.
∘ A further advantage of using a rigid support bracket as a part of the spacer relates to the operation of the elastomeric member, and the possibility of designing different repulsion spring force characteristics for the same. The support bracket has a certain bracket height. At least an upper part of this height may be used for accommodating flexible movement/compression of the elastomeric member. In preferred embodiments, the support bracket has an inner bracket cavity arranged to receive at least a portion of the elastomeric member. The size of this portion may increase as the elastomeric member is deformed. In some embodiment, the elastomeric member may be entirely received in the bracket cavity for sufficiently large external forces.

Further advantages of the inventive concept results from using a solid elastomeric material, compared to foamed material in the prior art. When using foamed material, it is not possible to control the distance-force characteristic, and the spring force values are also substantially different. A spacer made of foamed material simply creates a reaction force as a function of the foamed material and with a linear force-distance characteristic. As mentioned above, the invention makes it possible to control the repulsive spring force, or reaction force, at different points in the movement curve. Another advantage of the invention is that more foamed material would be needed in the prior art for creating the same reacting forces, something that may not always be possible in the restricted space available between the battery pack and the underside of the car body.

In some embodiments, the rigid support bracket is structured and arranged to accommodate, within an internal space of the support bracket, an increased part of the elastomeric member in response to an increased deformation of the elastomeric member caused by said external forces acting on the spacer. In such embodiments, the elastomeric member may be partly received in the bracket cavity already in the initial non-compressed state of the spacer. In some embodiment, the entire second part may be located in the bracket cavity. In response to the elastomeric member being deformed by external forces, a larger part or volume of the elastomeric member may be received in the bracket cavity, especially the first part of the elastomeric member.

In some embodiments, in the following referred to as "the dome design", the first part of the elastomeric member includes a dome-shaped wall having a convex outer surface facing away from the support bracket, wherein an apex of the dome-shaped wall defines the top end of the spacer in a non-compressed state of the spacer. The dome-shaped wall may define an inner space within the dome. During operation, the dome-shaped wall is arranged, in response to the external forces acting on the spacer, to be elastically deformed mainly by bending, from an initial curved shape to a less curved shape, thereby reducing the height of the first part of the elastomeric member. During this bending deformation, the wall of the dome will bend into the initial inner space of the dome. In some embodiments, the dome-shaped wall may have a circular or non-circular base. In some embodiments, the dome-shaped wall may present a non-constant curvature between its apex and its base. For instance, the dome-shape may have two different curvatures: a larger curvature closer to the apex resulting and a smaller curvature closer to the dome base. This may be an advantage if the dome-shaped design otherwise may present a too soft initial response.

In embodiments according to the dome design, the support bracket may present an upward open bracket cavity arranged to receive an increased part of the dome-shaped wall as the latter is deformed. This has the advantage of providing a space under the "dome" for receiving the elastomeric material when the dome-shaped wall is flattened. In some embodiments, substantially the entire first part may be received in the bracket cavity in response to sufficiently high external forces. Also, in some embodiments, the base of the dome-shaped wall may be located inside the bracket cavity in already in the uncompressed state of the spacer, and there be attached to the support bracket. In other embodiments, the dome-shaped wall may be attached to the support bracket only via the second part of the elastomeric member.

In embodiments according to the dome design, the second part of the elastomeric member may be arranged peripherally or circumferentially around the dome-shaped wall. The second part may be located above a top surface of the top end of the support bracket. The second part of the elastomeric member may be located at such a distance from the top end of the spacer along the axis of the spacer that there is a distance between the top end of the second part and the underside of the car body in the initial assembled state. In such embodiments, the second part of the elastomeric member is initially inactive because it is spaced from the underside of the car body. In response to sufficiently large forces the top cover, the top cover movements cannot be accommodated by the first part, and the underside of the car body will eventually make contact with the second part of the elastomeric member which thereby becomes active. As a result, further upward top cover movements results in a vertical compression of the second part, generating a second repulsive spring force higher than the repulsive spring force generated by the dome-shaped wall. In preferred embodiments, the second part is located at least in part above a top surface of the support bracket. The rigid support bracket will then act as an efficient rigid support under the second part being compressed, resulting in the aimed-at higher repulsive spring force when the second part becomes active. It will be appreciated that the total repulsive spring force of the spacer is the sum of the repulsive spring force generated by the first and the second part of the elastomeric member.

In embodiments according to the dome design, the second part of the elastomeric member may comprise a plurality of elastomeric studs, wherein each stud protrudes over a stud height towards a stud end of the stud facing away from the support bracket. The height of the studs is selected such that the stud ends are initially spaced from the underside of the car body in the initial assembled state. As described above, for sufficiently large top cover movements the studs will become activate and, by compression thereof, generate a distinct increase of the total repulsive spring force of the spacer. One advantage of using a plurality of studs or "towers" is that the material undergoing compression may be deformed out in the space between the studs. Another advantage of using studs for generating the second repulsive spring force is that such studs may comprise studs of varying stud height. In such embodiments, higher studs first becomes active, and lower studs becomes subsequently activate. Thereby, it is possible to design a smoother or less abrupt spring force characteristic, but still generating a substantial increase in the repulsive spring force compared to the force generated by the first part.

In some embodiments, in the following referred to as "the pillar design", the support bracket comprises a peripheral bracket wall which extends from the bracket base to the bracket top and defines an inner bracket cavity opening towards the top end of the support bracket, wherein the second part of the elastomeric member is located at least in part inside said bracket cavity and is attached to the bracket wall inside said bracket cavity. In this design, the first part of the elastomeric member may be structured and arranged to be elastically deformed by bending over itself in response to said external forces acting on the spacer. As in the dome design, such a bending may take place by the first part during the deformation thereof moves down into an initially open space defined by the elastomeric member. However, in the pillar design, the first part of the elastomeric member may be structured and arranged to undergo a bending by an increase of the curvature at at least some portions. The first part of the elastomeric member may be structured and arranged to be completely received within the bracket cavity in response to sufficient high external forces acting on the spacer, such that eventually a top surface of the bracket wall may be brought in contact with the underside of the car body. In the pillar design, the first part of the elastomeric member may have an extension transverse to the axis of the spacer which is less than the transverse extension of the bracket top. The pillar design may be advantageous to use when the space available for the spacer is restricted.

According to a further aspect of the inventive concept, there is provided a top cover arranged to be attached to a housing of an automotive battery pack, said top cover being provided with a plurality of spacers according to the invention, wherein each spacer of said plurality of spacers is attached at its bracket base to an upper side of the top cover, such that the spacer protrudes from the upper side of the top cover along said total height of the spacer. In some embodiments, the plurality of spacers comprise spacers having mutually different bracket height, and optionally mutually identical elastomeric members.

According to a further aspect of the inventive concept, there is provided a battery pack provided with a top cover as defined above.

According to a further aspect of the inventive concept, there is provided an assembly, comprising:
a car body; and
a battery pack which is provided with a top cover as described above, said battery pack being attached to an underside of the car body,
wherein a distance between the upper side of the top cover and the underside of the car body is such that the plurality of spacers provided on the top cover are in a biased state in response to the battery pack being attached to the underside of the car body.

According to a further aspect of the inventive concept, there is provided a method for mounting an automotive battery pack, said method comprising:
attaching a plurality of spacers according to the invention to an upper side of a top cover of an automotive battery pack, and
attaching the battery pack provided with said spacers to an underside of a car body, wherein in response to said attaching the battery pack the first parts of the elastomeric members of said plurality of spacers are subjected to an initial deformation for creating an initial biased state of the spacers. Terminology

In the present disclosure, the term "solid elastomeric material" should be interpreted as a non-foamed elastomeric material, such as solid silicon rubber. However, the elastomeric member as such made from such a material may optionally be present openings.

In the present disclosure, the term "bending" should be interpreted as a change of shape to a more curved shape and/or to a less curved shape. Although such bending of a component made from elastomeric material may involve some compression, in the present disclosure "bending" is used to differentiate from deformation caused by compression only.

The term "dome-shaped" in the present disclosure should be interpreted as a shape curved in two directions. Optionally, the dome-shaped surface is a surface of revolution generated by rotating a meridian curve about an axis of rotation. The curvature or radius may vary or be constant from the base of the dome to the apex of the dome. The base of the dome may have different geometrical shapes, such as circular or non-circular.

### BRIEF DESCRIPTION OF THE DRAWINGS

The inventive concept, some non-limiting embodiments, and further advantages of the inventive concept will now be described with reference to the drawings in which:
- Figs 1A to 1E: illustrate a damper according to a first embodiment.
- Figs 2A to 2E: illustrate the operation of the damper according to the first embodiment.
- Figs 3A to 3C: illustrate a damper according to a second embodiment.
- Figs 4A to 4B: illustrate the operation of the damper according to the second embodiment.
- Figs 5 and 6: illustrate a battery pack provided with spacers.
- Fig. 7: illustrates a battery pack top cover provided with spacers.

### DETAILED DESCRIPTION OF PREFERRED EMBODIMENTS

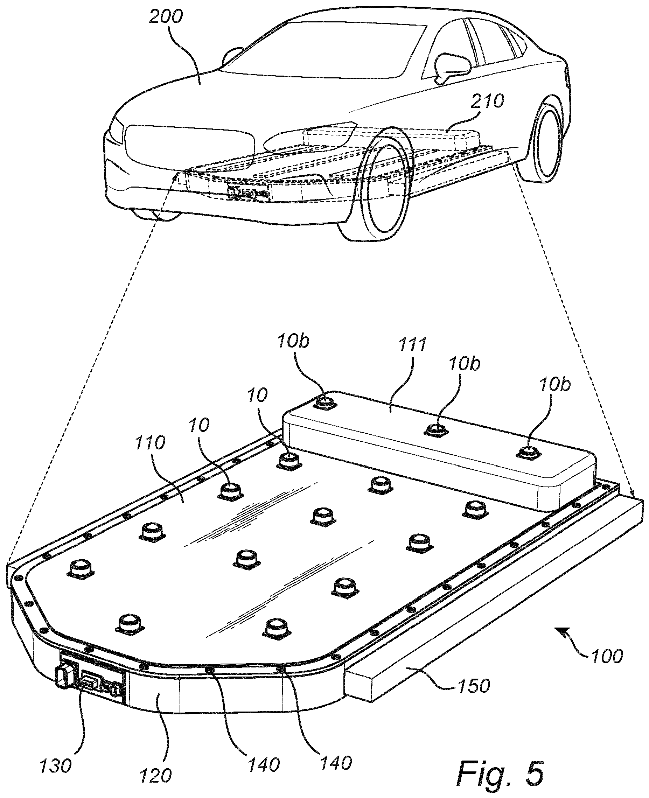

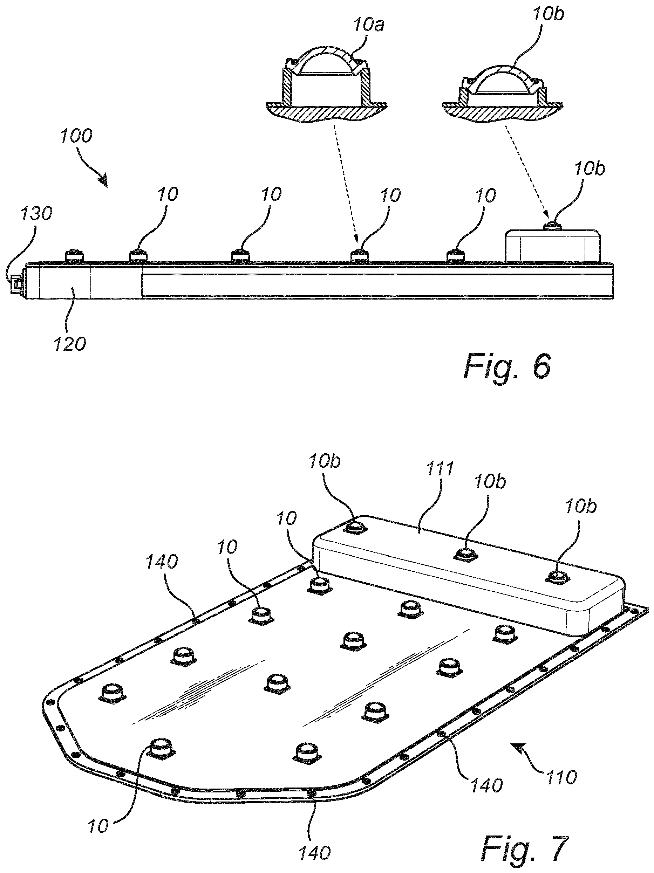

With reference first to Figs. 5 to 7, the general position of use of spacers according to the invention will first be described. As illustrated in Figs 5 to 7, a plurality of spacers 10 according to embodiments of the invention are structured and arranged to be attached to a top cover 110 of an automotive battery pack 100 for a vehicle 200, such as an electrical driven passenger car. In the assembly process, the spacers 10 may initially be attached to the upper side of the top cover 110 as shown in Fig. 7 before attaching the top cover 110, in a number and a pattern suitable for the specific car model and battery design. Thereafter, the top cover 110 may be attached to a trough-shaped housing 120 of the battery pack 100 as shown in Figs 5 and 6. Finally, the battery pack 100 is attached to the underside 210 of the car body as illustrated in Fig. 5. Optionally, the spacers 10 may be attached to the top cover 110 after the latter has been attached to the battery housing 120.

As an option in the manufacturing process, the spacers 10 may also be used as spacers between stacked top covers 110. The spacers 10 may be attached to the top cover 110 at a first site. A plurality of top covers 110 each provided with spacers 10 may then be stacked on top of each other on a pallet for transport to another site where the top covers 110 are subsequently attached to battery housings 120. During this transport, the spacers 10 will act as protective buffers and distance limiters between the stacked top covers 110.

As described above, a number of components (not shown) may be arranged inside the housing 120 of the battery pack 100, such as a plurality of rechargeable batteries, typically grouped in a battery modules, electronic battery management systems, cooling systems, thermal insulation, and structures to accommodate the individual battery modules. The housing 120 may be provided with external electrical connections 130. In some designs, the trough-like housing 120 is provided by a peripheral frame and a bottom cover attached to the peripheral frame. In other designs, the trough-like housing 120 is provided by a one piece component, such as a deep-drawn aluminum sheet. The housing 120 may also be provided with an internal compartment or accommodation structure for accommodating the battery modules.

The top cover 110 (Fig. 7) may typically be manufactured from a metal sheet, such as an aluminum sheet. The top cover 110 may have a shape and profile corresponding to the shape and profile of the car body underside 210, as schematically illustrated in Fig. 5. The shape and profile of the car body underside 210 may vary substantially between different car models and different battery packs 100, accordingly, the top cover 110 of the battery pack 100 may be designed to present a shape and profile corresponding to the shape and profile of the car body underside 210. As a non-limiting example only as shown in the figures, the profile of the top cover 110 may have raised portions, such as a rectangular raised portion 111, corresponding to a similar profile in the car body underside 210. However, due to the design of the inventive spacers 10, it may also be possible to have a top cover 110 presenting a shape and a profile which corresponds to a less degree to the shape and profile of the car body underside 210.

In the assembly process, the top cover 110 is attached to the housing 120 by screws extending through screw holes 140 arranged around the periphery of the top cover 110. Normally, the top cover 110 is sealed air-tight to the housing 120. For handling a thermal event of the battery pack 100, the top cover 110 should also be properly sealed to the housing 120 to prevent heat and smoke to get into the compartment.

In the assembly process, the battery pack 100 is thus provided with a plurality of spacers 10 according to the invention, preferably pre-attached to the top cover 110. As described above, because of the presence of the battery modules within the housing 120 it is normally not possible to attach the battery pack 100 to the car body underside 210 by attaching top cover 110 directly to the car body underside 210. For the attachment of the battery pack 100 to the car body underside 210, the housing 120 of the battery pack may therefore typically be provided with external attachment features 150 along the sides of the housing 120, such as elongate aluminum or steel structures arranged at opposite sides of the through-like housing 120 and provided with plurality of screw holes (not shown) for receiving assembly screws screwed into the car body underside 210 for attaching the battery pack 100.

As will be described more in detail below, the spacers 10 may preferably, not mandatory, be designed with such a height that the first parts of the elastomeric members of the spacers 10 are subjected to a certain deformation in response to the battery pack 100 being attached to the car body underside 210 during the assembly process, creating an initial pre-biased state of the spacers 10 during battery pack mounting. During driving conditions, one function of the spacers 10 is to limit and prevent excess movements of the top cover 110 towards the car body underside 210.

### 1^{st} embodiment

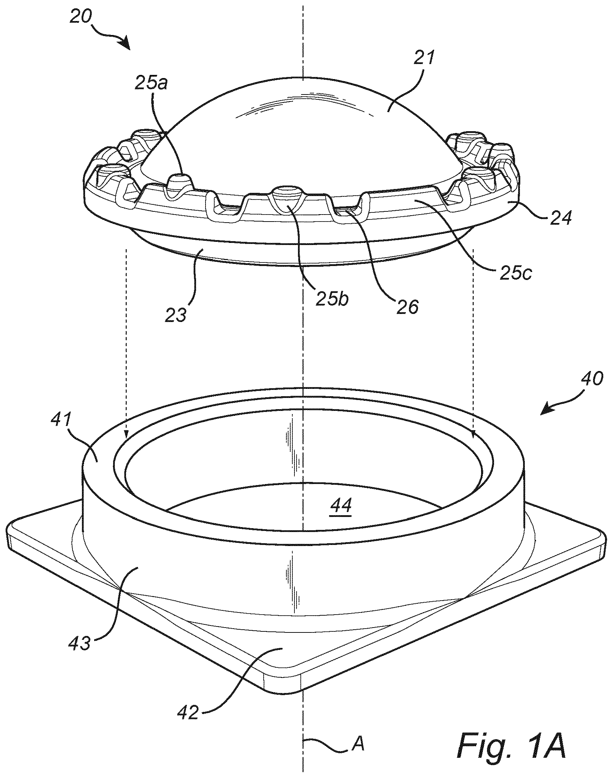

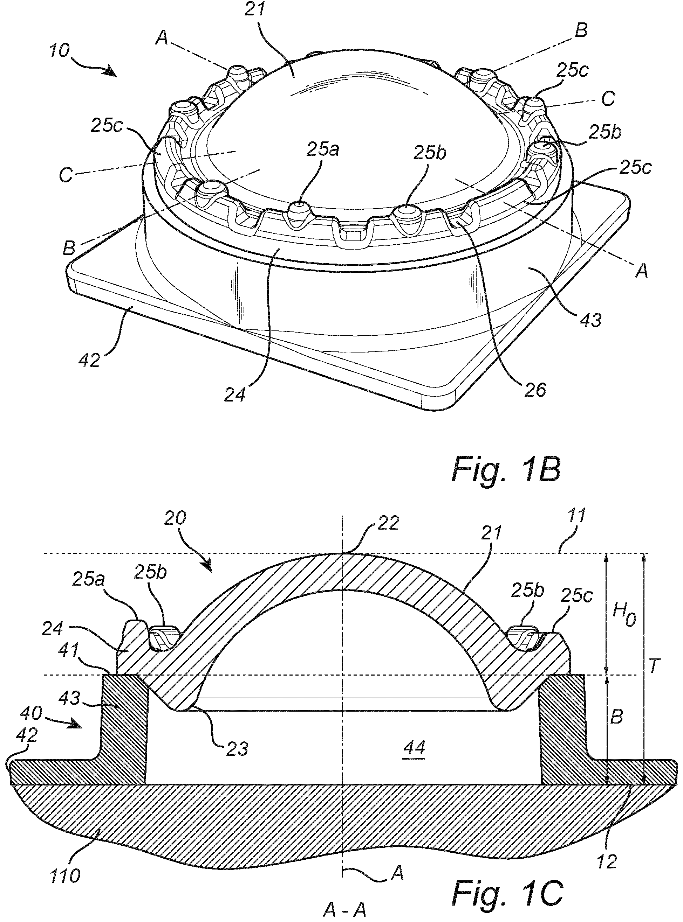

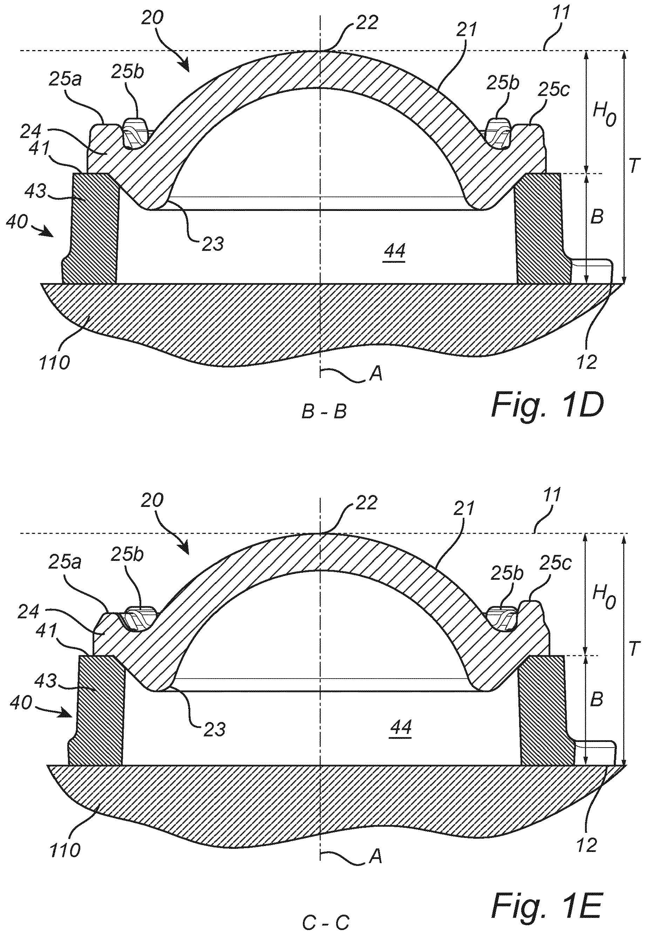

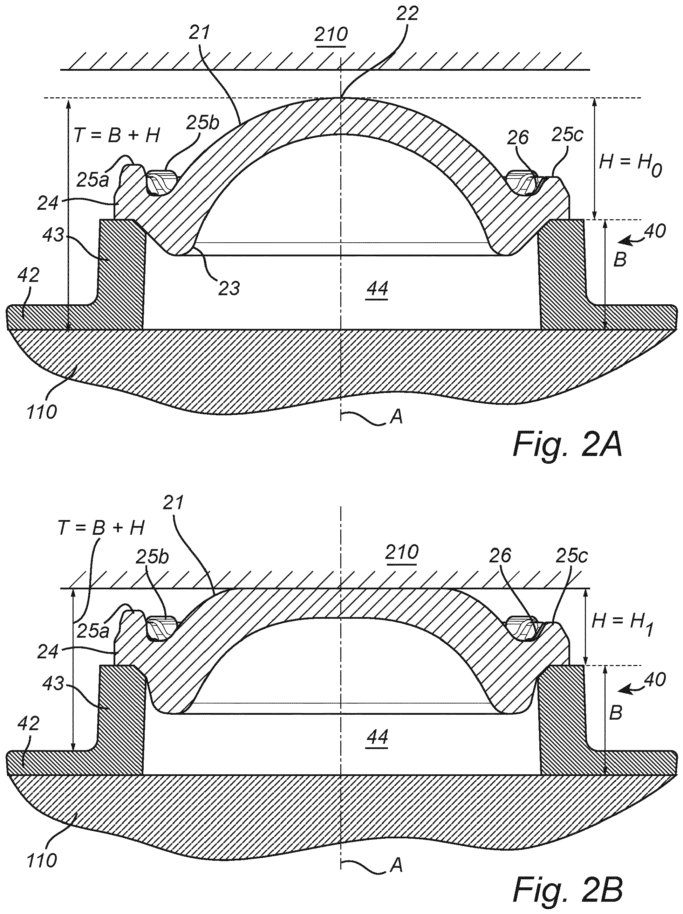

A first embodiment of a spacer 10 according to the invention will now be described with reference to Figs 1A to 1E, and the operation thereof will be described with reference to Figs 2A to 2E.

The first embodiment of a spacer 10 extends along an axis A between a top end 11 of the spacer 10 and a bottom end 12 of the spacer 10 (Fig. 1C). The axis A would normally be vertical in the position of use of the spacer 10, but inclined arrangements may also be possible.

The spacer 10 comprises an elastomeric member 20 and a rigid support bracket 40 arranged to support the elastomeric member 20. The elastomeric member 20 of an inventive spacer 10 may be attached to the support bracket 40 by molding or by assembly, such as by adhesives. The support bracket 40 may be manufactured from any suitable rigid material, such as a suitable plastic material, optionally reinforced. As indicated in Fig. 1C, the support bracket 40 has a bracket height B along the axis A between a bracket base 42 and a bracket top 41. For given spacer 10, the bracket height B is fixed, but as will be discussed below one advantage of the inventive concept lies in the possibility of varying the bracket height B. Optionally, a support bracket 40 having an adjustable bracket height B may be possible.

In the illustrated embodiment, the support bracket 40 comprises a cylindrical bracket wall 43 extending between the bracket top 41 and the bracket base 42, and defining an inner bracket cavity 44. In the illustrated embodiment, the bracket base 42 includes a plate shaped member integrally formed with the bracket wall 43 and extending partly outside the periphery of the bracket wall 43. For the attachment to the top cover 110 of the battery pack 100, the underside of the bracket base 42 may be provided with a double-sided adhesive tape. In the embodiment shown, the shape of the bracket wall 43 is circular cylindrical. Other shapes are possible, such as non-circular, rectangular, conical, etc. The main criteria for the support bracket 40 is that the support bracket 40 should be arranged to rigidly support the elastomeric member 20 of the spacer 10 above the top cover 110, and it should allow for deformation of the elastomeric member 20 in response to external forces generated by movements of the top cover 110. In some embodiments, the support bracket 40 may also be arranged to accommodate a variable part or volume of the elastomeric member 20 inside an inner bracket cavity 44 in response to deformation of the elastomeric member 20. In alternative embodiments, the support bracket 40 may have an inner structure which is at least partly solid.

As an illustrative but non-limiting example, the support bracket 40 may have a bracket height B representing around 50% of the total height T (Fig. 1C) of the spacer 10 in its initial undeformed state, for instance around 65 mm. The diameter of the bracket wall 43 may as a non-limiting example be around 30 mm. From a manufacturing cost perspective, it may be desired to limit the amount of elastomeric material used for the elastomeric member 20 and, accordingly, it may be desired to design the support bracket 40 with a bracket height B forming a major part of the total spacer height T. On the other hand, the bracket height B may not be too large so as to prevent a required operation range of the elastomeric member 20. In this numerical example, the elastomeric member 20 may extend about 10 mm above the bracket top 41 in the unloaded condition of the spacer 10 shown in Fig. 1C, giving resulting in a total spacer height T of 65 mm in the unloaded state of the spacer 10.

The elastomeric member 20 of the inventive spacer 10 is made from a non-foamed elastomeric material, in the present disclosure termed "solid elastomeric material". The elastomeric material may present a suitable hardness (soft, medium, hard). The Durometer, expressed as a number on the Shore A scale, may as a non-limiting example be in the interval of 40-70 (Shore A).

According to the inventive concept, the elastomeric member 20 of the spacer 10 comprises at least a first and a second part, where the first part first becomes active to generate a first repulsive spring force and the second part subsequently becomes active to generate a second higher repulsive spring force. In the first embodiment shown in Figs 1A to 1E, the first part of the elastomeric member 20 comprises a dome-shaped wall 21 having a convex outer surface facing away from the support bracket 40. The dome-shaped wall 21 defines an inner space into which the dome-shaped wall 21 may be deformed in response to external forces. An apex 22 of the dome-shaped wall 21 defines the top end 11 of the spacer 10 in its unloaded state in Figs 1A-1C. A base 23 of the dome-shaped wall 21 is located below the bracket top 41 and inside the bracket cavity 44. The dome-shaped wall 21 may have a constant curvature or a varying curvature between its base 23 and its apex 22. As described above, a higher curvature near the apex 22 may be preferred in order to avoid a too soft initial reaction force. The second part 24 of the elastomeric member 20 is arranged peripherally around the dome-shaped wall 21, and is at least in part located above the bracket top 20 to be vertically supported from underneath by the rigid bracket wall 43. In the illustrated embodiment, the second part 23 comprises a lower ring-shaped portion attached to the bracket top 41, and a plurality of vertically protruding parts 25a to 25c are arranged mutually spaced circumferentially around the first dome-shaped part 21. In this embodiment, the plurality of protruding parts or studs 25a to 25c have mutually different vertical heights (H₂ to H₄), and all have an upward facing stud top end vertically spaced from the apex 22 in the unloaded condition of the spacer 10, and also vertically spaced from the car body underside 210 in the initial assembled state of the spacer (Fig. 2A).

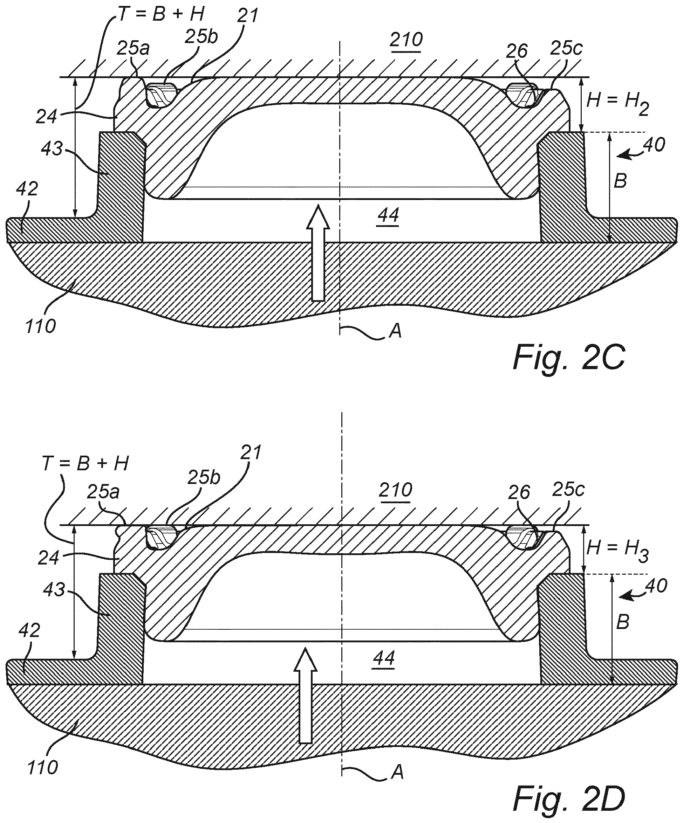

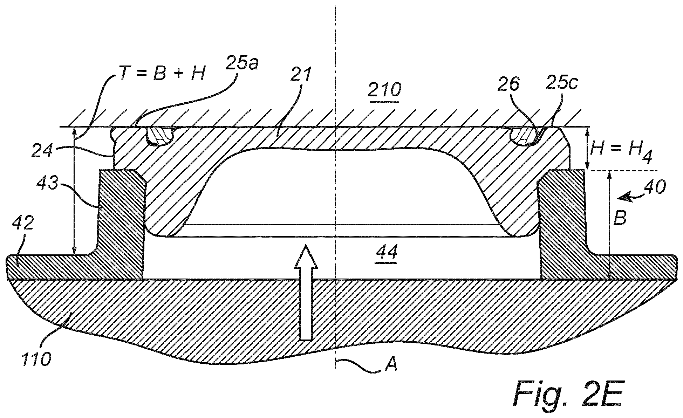

In the illustrated embodiment, the vertically protruding parts comprises:
∘ First studs 25a each having a top end located at a height H₂ above the bracket top 41 of the support bracket 40 (Fig. 2C).
∘ Second studs 25b each having a top end located at a somewhat lower height H₃ < H₂ above the bracket top 41 of the support bracket 40 (Fig. 2D).
∘ Third studs 25c each having a top end located at a still lower height H₄ < H₃ above the bracket top 41 of the support bracket 40 (Fig. 2E).

The studs 25a to 25c are structured and arranged, when they become active in response to larger movement of the top cover 110 of the battery pack 110, to be deformed mainly by vertical compression of the solid elastomeric material, for generating the second repulsive spring force. The rigid support bracket 40 acts as a rigid vertical support under the studs 25as to 25c during this compression. A spacing 26 between adjacent studs 25a to 25c allows the elastomeric material to expand laterally out in the spacing 26 during compression. In the illustrated embodiment, the lowest studs 25c are formed as ribs 25a each of which has an elongate extension in the circumferential direction. In alternative embodiments, the studs 25a-25c may be dispensed with and be replaced by a continuous ring-shaped wall forming the top end of the second part of the elastomeric member 20. In other alternative embodiments, all studs may have the same height. An advantage of providing studs of varying height is to create a less abrupt force increase when the second part of the elastomeric member 20 becomes active. It will be appreciated that there will be a certain distinct (non-linear) increase in the second repulsive force each time an additional set of studs becomes active.

The operation of the first embodiment of the spacer 10 shown in Figs 1A to 1E will now be described with reference to Figs. 2A to 2E.

Fig. 2A discloses the first embodiment of the spacer 10 in its unloaded state, spaced from the car body underside 210. The total height T of the spacer 10 is T= B + H₀, where H₀ is the height of the portion of the elastomeric member 20 which extends beyond the bracket top 41 in the unloaded condition of the spacer 10.

Fig. 2B discloses the spacer 10 in its initial assembled state. The batter pack 100 has been attached to the car body underside 210. In response thereto, the spacers 10 attached to the top cover 110 have been slightly compressed by flattening of the dome-shaped wall 21. The dome-shaped wall 21 has a portion extending beyond the bracket top 41 with a height H₁ < H₀. In this initial assembled state, the stud ends of all studs 25a to 25c are spaced from the car body underside 210.

Fig. 2C discloses the spacer 10 in a state where the normal operation range of the first part of the elastomeric member 20 has been reached. Contact is made between the highest studs 25a and the car body underside, and the protruding height of the elastomeric member 20 above the bracket top 41 is H₂ < H₁. The elastomeric response by the studs 25a is substantially stiffer than the response from the dome-shaped wall 21, and a substantial increase (non-linear) of the repulsive spring force will be achieved in order to more efficiently counteract further movement of the top cover 110.

Fig. 2D discloses the spacer 10 in a state where the top cover 110 have moved even further towards the car body under side 210, creating contact now also with the next highest studs 25b, generating a further non-linear increase of the repulsive spring force. The protruding elastomeric part is now reduced to a height H₃ < H₄.

Fig. 2D discloses the spacer 10 in a state where contact has been made also with the lowest studs 25c, resulting in an even greater repulsive spring force.

### 2^{nd} embodiment

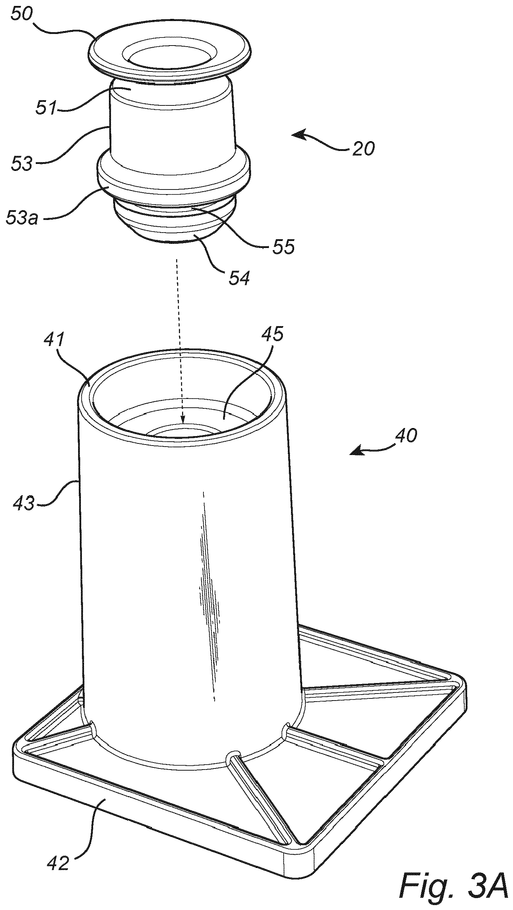

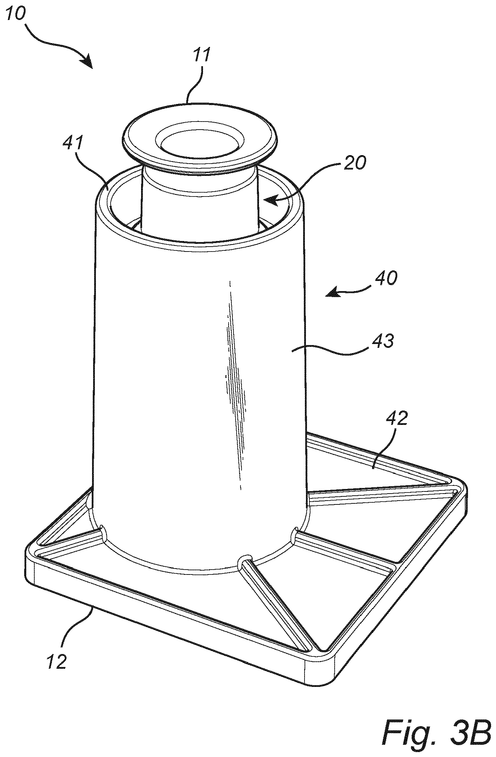

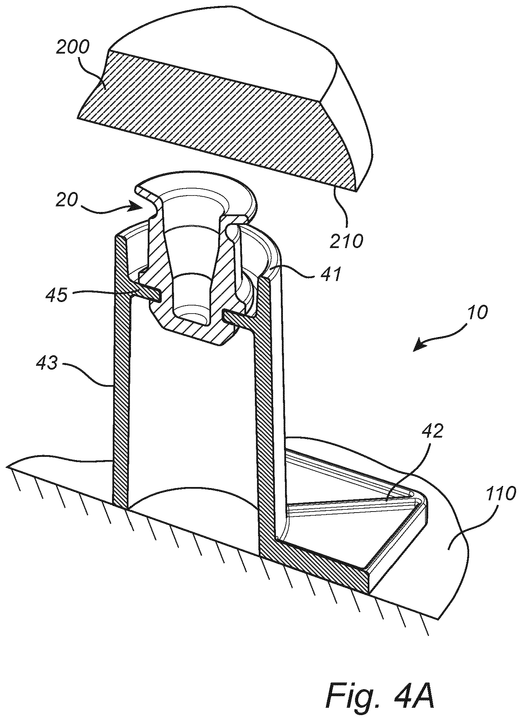

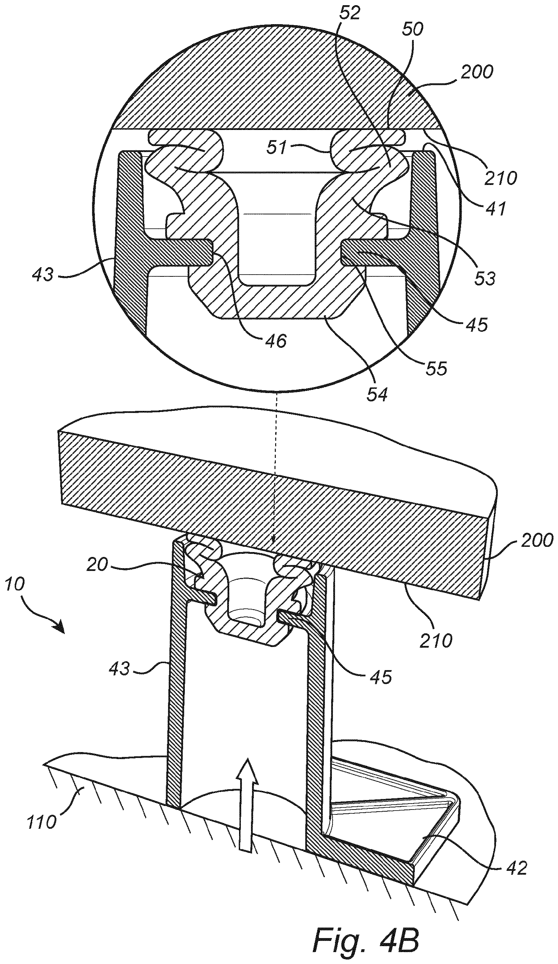

A second embodiment of a spacer 10 according to the invention will now be described with reference to Figs 3A to 3C, and the operation thereof will be described with reference to Figs 4A and 4B. Like parts have the same reference numbers as in the first embodiment. Statements made in connection with the first embodiment regarding materials, optional features of the spacer and its use, operation, and basic function thereof applies to the second embodiment also where applicable.

According to the second embodiment, the first part 50-52 of the elastomeric member 20 is located above an integrally formed with the second part 53 of the elastomeric member 20. The elastomeric member 20 comprises a first upper part 50-52 structured and arranged to operate mainly by bending, and a second lower part 53 under the upper part structured and arranged to operate mainly by compression.

In the illustrated second embodiment, the second part of the elastomeric member 20 does not present any free top surface initially spaced from the car body underside 210, corresponding to the free stud ends of the studs 25a-25c. Instead, the second part 53 becomes active as a result of the first part 50-52 of the elastomeric member 20 has first been deformed to such an extent that it starts pressing downwards on the second part 53 to compress the latter.

The embodiment in Figs 3A to 3C shows an example of a spacer 10 where the bracket height B forms an even larger percentage of the total spacer height T.

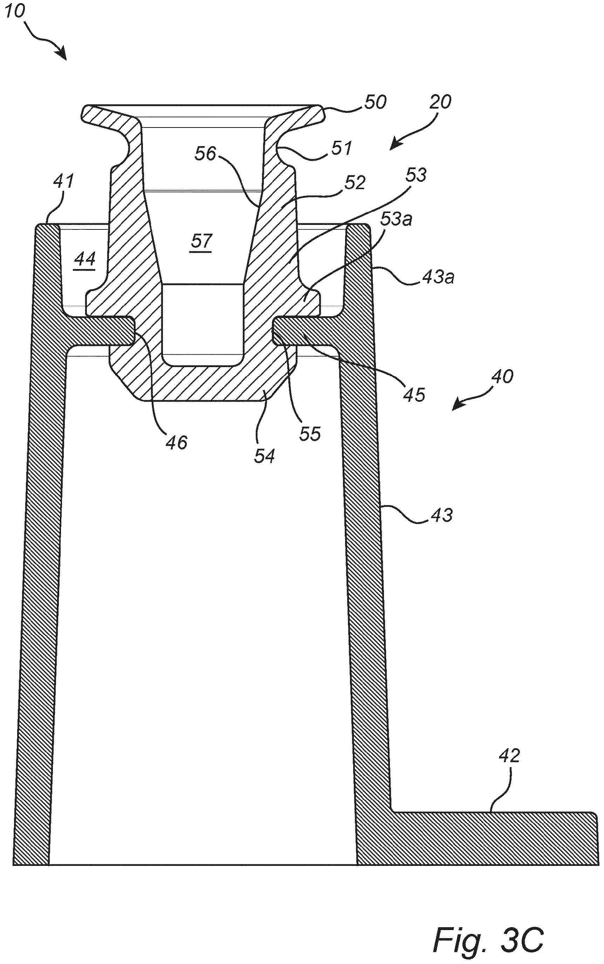

As mentioned above, the elastomeric member 20 of an inventive spacer may be connected to the support bracket 40 by molding, or by a subsequent assembly and attachment. The embodiment in Fig. 3A to 3C illustrates an example of the second alternative. As shown in Fig. 3C, the lower part of the elastomeric member 20 is provided with a circumferential mounting groove 55 defined by upper portion 53a and lower portion 54. The support bracket 40 is provided with an inner attachment flange 45 having a through opening 46 for receiving the lower part 54 of the elastomeric member 20. By deformation of the lower part 54 during assembly, the mounting groove 55 is brought into engagement with the attachment flange 45. This attachment principle may optionally be used in the first embodiment also. Attachment inside the support bracket 40 is preferred if the elastomeric member 20 should be able to be completely received inside the support bracket 40.

Optionally, as illustrated in Fig. 4b, the dimensions of the elastomeric member 20 in relation to the dimensions of the bracket wall 43 may be such that the elastomeric member 20 may be received completely inside the bracket cavity 44 in response to sufficiently large external forces. Thereby, for sufficiently large external forces the top surface 41 of the bracket wall 43 comes into direct contact with the car body underside 210 whereby the bracket height B defines a minimum spacer height T.

The operation of the second embodiment in Figs 3A to 3C will now be described with reference to Figs 4A and 4B. Fig. 4A illustrates the spacer 10 attached with its bracket base 42 to a top cover 110 before attachment of the battery pack 100 to the car body underside 210. Fig. 4B illustrates the spacer 20 in a deformed state where the first part 50-52 of the elastomeric member 20 has been essentially fully deformed by bending to an extent where compression of the second part 53 is initiated, and where there is still a distance between the bracket top 41 and the car body underside 210. In response to an even further upward movement of the top cover 110, the elastomeric member 20 may be compressed to such a degree that it eventually becomes completely received in the bracket cavity 44 where a rigid final movement stop is provided by the bracket top 41.

As stated above, the first part of the elastomeric member 20 is structured and arranged to operate mainly by bending. For obtaining such an operation, the first part in the illustrated embodiment comprises a funnel-shaped upper portion 50, an inwardly curved intermediate portion 51 with a reduced wall thickness, and a lower portion 52. Deformation of the first part of the elastomeric member 20 is illustrated in the enlarged view in Fig. 4B, showing how the first part bends over itself. In this embodiment, there is a free space on the outer side around the intermediate portion 51 allowing bending to take place. Also, as seen in Fig. 3C, the lower portion 52 has a somewhat reduced wall thickness compared to the second part 53, also promoting a bending movement.

With reference to Figs 6 and 7, the illustrated example of the battery pack 100 comprises a cover lid 110 having a raised or stepped portion 111 at one end. The spacers attached to the raised portion have reference numeral 10b. This illustration is to demonstrate the option of having varying bracket heights B for a given top cover 110. As shown in the enlarged-scale view in Fig. 6, the spacers 10b on the raised portion 111 has a lower bracket height B compared to the rest of the spacers 10a. However, as illustrated in Fig. 6 the elastomeric member 20 may identical between the spacers 10a and 10b, giving the same repulsive spring force characteristic for all spacers over the top cover 110.

## Claims

1. A spacer extending along an axis of the spacer between a top end of the spacer and a bottom end of the spacer, said spacer being arranged to be provided between a car body and a battery pack top cover for limiting movement of the top cover towards the car body, said spacer comprising:
a rigid support bracket having a bracket height extending along said axis between a bracket base of the bracket and a bracket top of the bracket, said bracket base being arranged to be attached to the top cover and defining the bottom end of the spacer; and
an elastomeric member supported by the support bracket and made from a solid elastomeric material, said elastomeric member having first and second integrally formed parts, said first part extending to and forming the top end of the spacer, and said second part being attached to the support bracket,
wherein:
the first part of the elastomeric member is structured and arranged to be elastically deformed mainly by bending of the elastomeric material in response to external forces acting on the spacer for generating a first repulsive spring force;
the second part of the elastomeric member is structured and arranged to be elastically deformed mainly by compression of the elastomeric material in response to said external forces acting on the spacer exceeding a predetermined value, for generating a second repulsive force higher than the first repulsive force generated by the first part; and
said bracket height plus the height of the elastomeric member between the bracket top and the top end of the spacer forms a total height of the spacer.

2. The spacer according to claim 1, wherein the support bracket is structured and arranged to accommodate, within an internal space of the support bracket, an increased part of the elastomeric member in response to an increased deformation of the elastomeric member caused by said external forces acting on the spacer.

3. The spacer according to claim 2, wherein the support bracket is arranged to accommodate, within said internal space of the support bracket, an increased part of the first part of the elastomeric member in response to an increased deformation of the elastomeric member caused by said external forces acting on the spacer.

4. The spacer according to any of the preceding claims, wherein the first part of the elastomeric member includes a dome-shaped wall having a convex outer surface facing away from the support bracket, and wherein an apex of the dome-shaped wall defines the top end of the spacer in an unloaded state of the spacer.

5. The spacer according to claim 4, wherein the dome-shaped wall has a base located at least in part inside an inner cavity of the support bracket.

6. The spacer according to claim 4 or 5, wherein the second part of the elastomeric member is:
arranged peripherally around the dome-shaped wall,
located at least in part above the top end of the support bracket, and
in an unloaded state of the spacer, located at a distance from the top end of the spacer.

7. The spacer according to claim 6, wherein the second part of the elastomeric member comprises a plurality of elastomeric studs arranged circumferentially around the dome-shaped wall, wherein each stud of said elastomeric studs protrudes in the direction of said axis towards a stud end of the stud facing away from the support bracket.

8. The spacer according to claim 7, wherein said plurality of elastomeric studs comprises some elastomeric studs having a stud height different from other elastomeric studs.

9. The spacer according to any of claims 4 to 8, wherein the support bracket comprises a bracket wall which extends circumferentially about said axis with a bracket diameter being larger than a base diameter of the dome-shaped wall.

10. The spacer according to any of claims 1 to 3, wherein the support bracket comprises a peripheral bracket wall which extends from the bracket base to the bracket top and defines an inner bracket cavity opening towards the top end of the support bracket, and wherein the second part of the elastomeric member is located at least in part inside said bracket cavity and is attached to the bracket wall inside said bracket cavity.

11. The spacer according to claim 10, wherein the first part of the elastomeric member is structured and arranged to be elastically deformed by bending of over itself in response to said external forces acting on the spacer.

12. The spacer according to claim 10 or 11, wherein the first part of the elastomeric member is structured and arranged to be completely received within the bracket cavity in response to sufficient high external forces acting on the spacer.

13. A top cover arranged to be attached to and close a housing of an automotive battery pack, and said top cover being provided with a plurality of spacers according to any of claims 1 to 12, wherein each spacer of said plurality of spacers is attached at its bracket base to an upper side of the top cover, such that the spacer protrudes from the upper side of the top cover along said total height of the spacer.

14. The top cover according to the previous claim, wherein said plurality of spacers comprise spacers having a mutually different bracket height.

15. A battery pack provided with a top cover according to any of claims 13 to 15.

16. An assembly comprising a car body and a battery pack according to claim 15, said battery pack being attached to an underside of the car body, wherein a distance between the upper side of the top cover and the underside of the car body is such that the plurality of spacers provided on the top cover are in a biased state in response to the battery pack being attached to the underside of the car body.

17. A method for mounting an automotive battery pack, said method comprising:
attaching a plurality of spacers according to any of claims 1 to 12 to an upper side of a top cover of an automotive battery pack, and
attaching a battery pack provided with the top cover with said spacers to an underside of a car body, wherein in response to said attaching the battery pack the first parts of the elastomeric members of said plurality of spacers are subjected to an initial deformation for creating an initial biased state of the spacers.
